# EUROPÄISCHE PATENTSCHRIFT

(11) **EP 2 094 954 B1**
(45) Veröffentlichungstag und Bekanntmachung des Hinweises auf die Patenterteilung: **13.10.2010**
(21) Anmeldenummer: 07847188.5
(22) Anmeldetag: 15.11.2007
(51) Int. Cl.: F01N 3/20, B01D 53/90

(54) **DOSIERVORRICHTUNG FÜR FLÜSSIG-REDUKTIONSMITTEL**
METERING DEVICE FOR LIQUID REDUCING AGENT
DISPOSITIF DE DOSAGE D'AGENT DE RÉDUCTION

(30) Priorität: 28.12.2006 DE 102006061731
(43) Veröffentlichungstag der Anmeldung: 02.09.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE); LUEDERS, Hartmut, 71720 Oberstenfeld (DE); BERNEGGER, Leopold, A-5421 Adnet (AT)
(86) Internationale Anmeldenummer: PCT/EP2007/062419
(87) Internationale Veröffentlichungsnummer: WO 2008/080692

(56) Entgegenhaltungen:
- WO-A-00/21881
- DE-A1-102004 054 238

## Beschreibung

### Stand der Technik

Die Erfindung geht aus von einer Dosiervorrichtung zum Einbringen von Flüssig-Reduktionsmittel in einen Abgasstrang.

Bei Betrieb von Verbrennungsmotoren entstehen Abgase, die Stickoxide enthalten. Zur Reduzierung der Stickoxide wird flüssiges Reduktionsmittel verwendet, welches NOₓ zu N₂ und H₂O reduziert. Hierzu wird das flüssige Reduktionsmittel über ein Dosierventil in den Abgasstrang des Verbrennungsmotors eingebracht.

Bei üblichen flüssigen Reduktionsmittel besteht die Gefahr, dass dieses bei niedrigen Temperaturen gefriert. Je nach zugesetztem Frostschutzmittel liegt der Gefrierpunkt zwischen -11 °C und ca. -40 °C. Beim Phasenübergang des flüssigen Reduktionsmittels in die Feststoff-Phase kann es zu einer Volumenzunahme von bis zu 10 % kommen, so dass die Komponenten der Dosiervorrichtung eine geeignete Eisdruckfestigkeit aufweisen müssen. Alternativ werden andere Maßnahmen eingesetzt, um die betreffenden Komponenten vor Beeinträchtigungen durch Gefrieren des Reduktionsmittel zu schützen. Insbesondere ist die Eisdruckfestigkeit des Dosierventils, welches das flüssige Reduktionsmittel in den Abgasstrang einsprüht, von besonderer Relevanz für die Funktion der Dosiervorrichtung.

Bei Nutzkraftwagen wird die zusätzliche Leitung, welche zur aktiven Kühlung des Dosierventils mit Reduktionsmittel dient, zur Belüftung verwendet. Die zusätzliche Leitung dient in diesem Falle dazu, Luft aus dem Luftraum des Tanks anzusaugen und zur Belüftung der Dosiervorrichtung zu verwenden. Durch die Belüftung wird das flüssige Reduktionsmittel aus den einzelnen Komponenten entfernt, wodurch sich beim Einfrieren keine Schädigungen ergeben. Jedoch sind in diesem System zwei Leitungen nochwendig, eine Versorgungsleitung und die zusätzliche Leitung, die auch zur aktiven Kühlung verwendet wird.

Beispielsweise im Pkw wird eine passive Kühlung verwendet, so dass keine zweite Leitung zur Verfügung steht.

In der Druckschrift DE 102004054238 A1 wird ein Dosiersystem beschrieben, in dem eine Förderpumpe für Reduktionsmittel in einer Förderrichtung Reduktionsmittel an ein Dosierventil liefert, und in umgekehrter Förderrichtung über ein Ventil Frischluft ansaugt, um das Dosiersystem zu belüften. Zur Zuführung der Frischluft wird ein zusätzliches steuerbares Belüftungsventil verwendet.

### Offenbarung der Erfindung

Die erfindungsgemäße Dosierungsvorrichtung und das erfindungsgemäße Verfahren zum Betreiben einer Dosiervorrichtung ermöglicht das Belüften der Dosiervorrichtung, ohne ein zusätzliches Belüftungsventil vorsehen zu müssen. Dabei ist keine zusätzliche Belüftungsleitung notwendig. Die erfindungsgemäße Dosiervorrichtung umfasst nur die Komponenten, die zum Einbringen von Reduktionsmittel notwendig sind, erlaubt jedoch gleichzeitig eine Belüftung der Fördereinrichtung, wobei zur Belüftung die selben Komponenten verwendet werden, die auch zum Einbringen von Flüssig-Reduktionsmittel dienen. Die erfindungsgemäße Vorrichtung und das erfindungsgemäße Verfahren ermöglichen das Entfernen von flüssigem Reduktionsmittel, so dass auch bei tiefen Temperaturen keine Schäden durch Eisbildung entstehen können. Dadurch wird eine Leckage des Reduktionsmittels am Dosierventilsitz vermieden, wie sie bei anderen unbelüfteten Dosiervorrichtungen auftreten kann. Die Fördereinrichtung fördert das Reduktionsmittel aus einem Arbeitstank, der regelmäßig von einem Lagertank befüllt wird. Dieser ist über eine Befüllungsleitung mit der Fördereinrichtung verbunden, wobei die Befüllungsleitung ein Zuschalt-Sperrventil aufweist, das angesteuert werden kann, um den in den Lagertank hinein führenden Fluidfluss zu sperren. Das Zuschalt-Sperrventil kann als Rückschlag-Ventil vorgesehen werden, das in passiver Weise den Fluidfluss nur in einer Richtung zulässt und in dieser Richtung einen geringen minimalen Öffnungsdruck aufweist. Alternativ kann dieses Ventil auch als aktives Ventil vorgesehen werden, welches von einem Steuersystem aktiv eingestellt werden kann. In dieser Weise kann ein Steuersystem das Zuschalt-Sperrventil öffnen oder schließen. Vorzugsweise öffnet oder schließt das Steuersystem das Zuschalt-Sperrventil abhängig von der Förderrichtung der Fördereinrichtung. Ist die Förderrichtung umgekehrt und das Dosierventil geschlossen, so kann, bei entsprechender Ansteuerung des Zuschalt-Sperrventils, falls es ein aktives Zuschalt-Sperrventil ist, Reduktionsmittel vom Lagertank in den Arbeitstank gefördert werden.

Gemäß eines Aspekts der Erfindung wird die Fördereinrichtung, welche im Normalbetrieb das Reduktionsmittel an das Dosierventil fördert, zur Entleerung beziehungsweise Entlüftung des Dosierventils verwendet. Hierzu wird das Dosierventil bei umgekehrter Förderrichtung geöffnet, so dass, entgegen der Förderrichtung, Gas aus dem Abgasstrang in das Dosierventil eintritt. Dadurch wird das Dosierventil und die zu diesem führenden Leitungen geleert.

Gemäß einer Ausführung der Erfindung wird hierzu die Arbeitsrichtung der in der Fördereinrichtung vorgesehenen Pumpe umgekehrt. Alternativ kann die Arbeitsrichtung der Pumpe beibehalten werden und ein Umpolungsventil kann vorgesehen werden, welches den Ansaugeingang mit dem Abgabeausgang der Pumpe vertauscht, so dass die Funktionen für das daran angeschlossene Restsystem der beiden Anschlüsse der Fördereinrichtung vertauscht sind.

Durch die Zweiteilung der Tanks kann der im Kraftfahrzeug vorgesehene Raum besser genutzt werden. Ferner kann der Arbeitstank eine Heizung aufweisen, so dass nur ein Teil der Gesamtmenge des im Fahrzeug gespeicherten Reduktionsmittels erwärmt werden muss, falls es eingefroren ist. Dadurch kann die Zeit zur Betriebsbereitschaft der Dosiervorrichtung verkürzt werden. Die Befüllung des Arbeitstanks kann im Nachlauf, d.h. nach dem Abstellen des Verbrennungsmotors, durchgeführt werden. Alternativ wird der Arbeitstank neu befüllt, wenn der Verbrennungsmotor nur wenig Stickoxide erzeugt.

Gemäß einer Ausführung der Erfindung ist der Lagerbehälter über das Zuschalt-Sperrventil mit der Förderpumpe verbunden. Die Förderpumpe wiederum hat direkten Zugang zum Arbeitstank. Das Dosierventil ist vorzugsweise an die Verbindung zwischen dem Zuschalt-Sperrventil und der Fördereinrichtung angeschlossen. In dieser Ausführung der Erfindung dient die Schließfunktion des Dosierventils zum einen dazu, die in den Abgasstrang eingespritzte Dosiermittelmenge zu begrenzen. Zum anderen ermöglicht das Sperren des Dosierventils bei gleichzeitig umgekehrter Förderrichtung, dass die Fördereinrichtung neben der Versorgung des Dosierventils mit Reduktionsmittel auch dazu verwendet wird, Reduktionsmittel von dem Lagertank durch das Zuschalt-Sperrventil am Dosierventil vorbei in den Arbeitsbehälter zu fördern. Auf diese Weise kann eine weitere Funktion vorgesehen werden, ohne dass zusätzliche Komponenten notwendig sind. Mit anderen Worten erlauben es die Eigenschaften sowie die Beschaffung des Dosierventils und der Fördereinrichtung, zwei Funktionen zu übernehmen, das heißt das Einspritzen von Reduktionsmittel und das wiederholte Befüllen des Arbeitstanks ausgehend von dem Lagertank.

Gemäß einer erfindungsgemäßen Vorrichtung ist das Zuschalt-Sperrventil eingerichtet, den Fluidfluss in den Lagertank hinein steuerbar zu sperren, während die Fördereinrichtung in Förderrichtung arbeitet und das Dosierventil sperrt. Dadurch kann auch das Zuschalt-Sperrventil belüftet werden, indem Gas zu dem Lagertank geleitet wird. Hierdurch ermöglicht die Fördereinrichtung zudem eine Belüftung des Zuschalt-Sperrventils, indem Gas, das vorher bei Umkehr der Förderrichtung über das Dosierventil in die Dosiervorrichtung gelangt ist, durch Sperren des Dosierventils und Betreiben der Fördereinrichtung in Förderrichtung zum Belüften des Zuschalt-Sperrventils verwendet werden kann. Das Zuschalt-Sperrventil kann auch als Drossel ausgeführt sein, deren Durchflussrate von außen steuerbar ist.

Somit haben das Dosierventil und die Fördereinrichtung eine weitere Funktion, die darin besteht, dass bereits eingesaugtes Gas, beispielsweise Abgas, in das geöffnete Zuschaltventil eingebracht wird und so vor Schäden bei tiefen Temperaturen durch Eisdruck vermieden werden. Vorzugsweise wird die Fördereinrichtung nur kurz betrieben, um zu vermeiden, dass sich die Dosiervorrichtung, insbesondere die Förderpumpe und das Dosierventil, wieder mit Dosiermittel aus dem Arbeitstank füllt. Daher umfasst die Leitung zwischen Dosierventil, Förderpumpe und Arbeitstank ein größeres Volumen als die Verbindung zwischen Zuschaltventil und Einkupplungspunkt des Dosierventils, so dass zunächst eine größere Volumenmenge an Abgas über das Dosierventil in die Dosiervorrichtung gelangen kann, die ausreichend ist, um das Zuschalt-Sperrventil sowie die von Zuschalt-Sperrventil zum Dosierventil führende Leitung zu leeren.

Gemäß einer bevorzugten Ausführung der Erfindung umfasst die Ent- und Belüftungsvorrichtungen für den oder für die Tanks, beispielsweise in Form von Ventilen oder Drosseln, die einen Druckausgleich mit der Umgebung erlauben. Dadurch wird der Unterdruck und der Überdruck kompensiert, welcher durch die Förderung und Umlagerung des Tankinhalts entsteht.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine Dosiervorrichtung im Einspritzmodus;
- Figur 2: eine Dosiervorrichtung im Einspritz- und Entlüftungsmodus;
- Figur 3: Dosiervorrichtung mit einer Fördereinrichtung, deren Förderrichtung umgekehrt werden kann;
- Figur 4: eine Ausführung der erfindungsgemäßen Dosiervorrichtung mit einem Lagertank, der einen Arbeitstank befüllt;
- Figur 5: eine weitere Ausführung der erfindungsgemäßen Dosiervorrichtung mit einem aktiven Zuschalt-Sperrventil, über das ein Arbeitstank von einem Lagertank gespeist wird;
- Figur 6: eine Ausführung der erfindungsgemäßen Dosiervorrichtung, in der über ein Dosierventil Luft eingesaugt wird; und
- Figur 7: eine Ausführung der erfindungsgemäßen Dosiervorrichtung, in der ein aktives Zuschalt-Sperrventil belüftet wird.

### Ausführungsformen der Erfindung

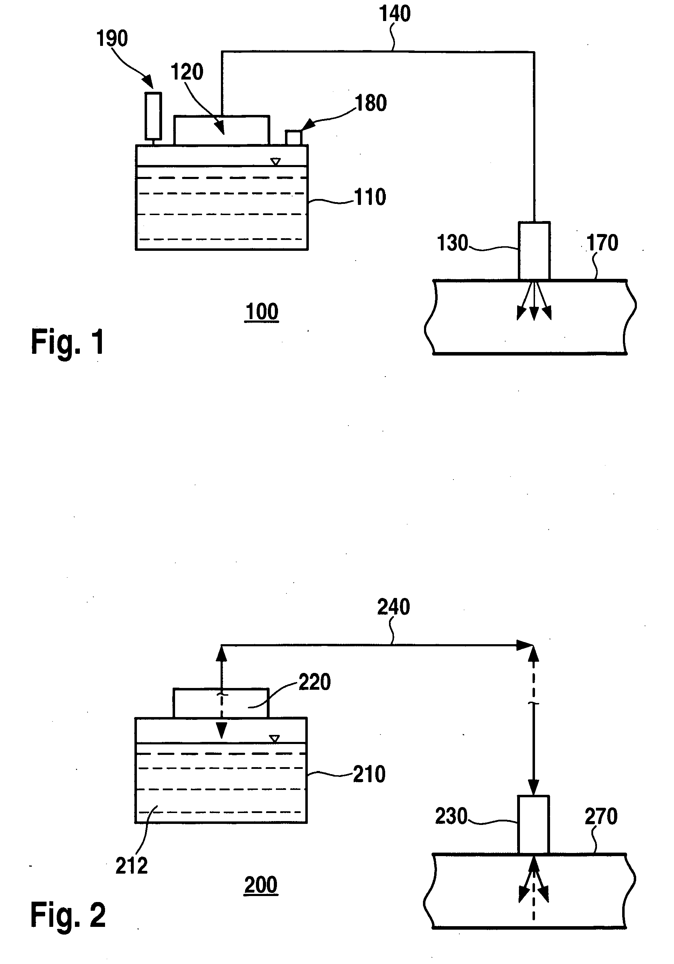

In der Figur 1 ist eine Dosiervorrichtung dargestellt, die einen Tank 110, eine Fördereinrichtung 120 und ein Dosierventil 130 aufweist. Die Fördereinrichtung fördert den Inhalt des Tanks 110 über eine Leitung 140 an das Dosierventil 130. Das Dosierventil 130 ist direkt an ein Abgasrohr 170 angeschlossen, welches einen Teil eines Abgasstrangs darstellt. Das Dosierventil 130 ist mit geeigneten Mitteln an dem Abgasrohr 170 befestigt, beispielsweise über einen Adapter, eine Steckverbindung, eine Schraubverbindung, einen Flansch und/oder einen Bajonettverschluss. Die Leitung 140 kann einteilig mit dem Do sierventil 130 ausgeführt sein, oder kann über eine Steckverbindung mit diesem verbunden sein.

Ebenso ist die Fördereinrichtung 120 über eine stabile Verbindung mit Leitung 140 verbunden, beispielsweise mittels einer einteiligen Ausführung, einer Steckverbindung oder auch durch eine der oben genannten Verbindungstypen. Der Tank 110 kann über eine Befüllöffnung 180 befüllt werden. Ferner ist ein Be-/Entlüftungsventil 190 in Fluidkommunikation mit dem Tank 110, um einen Überdruck oder einen Unterdruck in dem Tank gegenüber der Umgebung auszugleichen. Alternativ oder in Kombination hierzu wird eine Drossel zur Be- bzw. Entlüftung verwendet, um eine Geruchsbelästigung durch hohe Dosiermittel und Ammoniakkonzentrationen im Außenraum zu vermeiden.

Vorzugsweise sind das Be- und Entlüftungsventil 190 und / oder die Befüllöffnung 180 an der Oberseite des Tanks 110 angeordnet. Bei entsprechender Orientierung des Tanks 110 in einem Kraftfahrzeug bleibt so die Befüllungsöffnung 180 und insbesondere das Be-/Entlüftungsventil 190 trocken. Die Fördereinrichtung 120 umfasst eine Pumpe, die mit einer Verleitung verbunden ist, deren unteres Ende am Boden des Tanks 110 angeordnet ist. So bleibt die Versorgung der Dosiervorrichtung mit Reduktionsmittel auch bei niedrigen Pegelständen gewährleistet.

Die Fördereinrichtung 120 fördert den Tankinhalt 110, das heißt das zur Entstickung verwendete flüssige Reduktionsmittel, beispielsweise wässrige Harnstofflösung, an das Dosierventil 130, so dass in Leitung 140 ein Überdruck besteht. Das Dosierventil 130 kann gegebenenfalls teilweise oder vollständig öffnen, um Reduktionsmittel in das Abgasrohr 170 einzubringen. Alternativ oder in Kombination hierzu kann die Fördereinrichtung 120 angesteuert werden, um keine oder nur eine bestimmte Menge an Reduktionsmittel zu fördern, abhängig von der erforderlichen Reduktionsmittelmenge. Die Durchflussmenge kann über den Pegel eines elektrischen Signals oder über ein pulsweitenmoduliertes Steuersignal wertkontinuierlich eingestellt werden.

Wenn die Dosiervorrichtung 100 nach dem Betrieb abgestellt wird und die Temperatur unter den Gefrierpunkt des Reduktionsmittels fällt, so gefriert das in der Fördereinrichtung 120, in der Leitung 140 und in dem Dosierventil 130 verbliebene Reduktionsmittel und insbesondere in dem Dosierventil. Das gefrierende Reduktionsmittel dehnt sich beim Phasenübergang in den Feststoff an dieser Stelle aus. Dadurch kann das Dosierventil Schaden erleiden, beispielsweise durch bleibende Deformationen, die durch die Volumenänderung beim Phasenübergang hervorgerufen werden.

Die Figur 2 zeigt eine Dosiervorrichtung 200 zur Erläuterung der Lüftungsfunktion. Die in Figur 2 dargestellte Dosiervorrichtung umfasst, wie auch die in Fig. 1 dargestellte Vorrichtung, einen Tank 210, eine Fördereinrichtung 220, ein Dosierventil 230 sowie eine Leitung 240, die das Fördermodul, welches Reduktionsmittel aus dem Tank 210 fördert, an das Dosierventil 230 liefert. Ebenso wie in der Ausführung von Figur 1 ist das Dosierventil an einem Abgasrohr 270 befestigt, um den Tankinhalt 212 des Tanks 210 in das von dem Abgasrohr umschlossene Volumen einzuspritzen. Die durchgezogenen Pfeile zeigen die Förderrichtung der Fördereinrichtung 220, beginnend von der Förderung des Tankinhalts 212 bis zur Einspritzung in dem Abgasrohr 270.

Wird das Fahrzeug, in dem die Dosiervorrichtung vorgesehen ist, abgestellt, so müssen Vorkehrungen getroffen werden, um ein Einfrieren von Reduktionsmittel in der Dosiervorrichtung, insbesondere in eisdruckempfindlichen Komponenten, zu verhindern. Erfindungsgemäß wird, wie es die gestrichelten Pfeile darstellen, Gas aus dem Abgasrohr 270 von dem Dosierventil eingesogen. Das eingesogene Gas tritt an die Stelle des Reduktionsmittels, welches in der Leitung 240, in dem Dosierventil 230 und in der Förderrichtung 220 verblieben ist, so dass die Dosiervorrichtung trocken verbleibt.

Das in der Leitung 240, in dem Ventil 230 und der Fördereinrichtung 220 verbliebene Reduktionsmittel wird vollständig in den Tank 210 zurückgesogen. Das von dem Reduktionsmittel eingenommene Volumen wird nun durch das aus dem Abgasrohr 270 entnommene Gas eingenommen.

Vorzugsweise saugt die Fördereinrichtung, entgegen ihrer üblichen Förderrichtung, das Gas aus dem Abgasrohr 270, nachdem der Verbrennungsmotor abgestellt wurde, oder ein Zeitintervall später, zu gewährleisten, dass das Abgas zumindest zu einem Teil aus dem Abgasrohr ausgeströmt ist, so dass Umgebungsluft oder ein Gemisch von Umgebungsluft und Abgas von der Dosiervorrichtung eingesogen wird. Die Zeit, die zwischen dem Abstellen des Verbrennungsmotors und dem Beginn des Einsaugevorgangs verstreicht, wird vorzugsweise so gewählt, dass das verbliebene Verbrennungsabgas schon größtenteils aus dem Abgasrohr entwichen ist, beispielsweise durch Konvektion oder die Diffundierungsprozesse, und gleichzeitig gewährleistet ist, dass das Reduktionsmittel noch deutlich oberhalb der Gefriertemperatur ist. Vorzugsweise wird ein Temperatursensor verwendet, der die Temperatur des Reduktionsmittels misst, oder der die Umgebungstemperatur misst, um den Gefrierzeitpunkt des Reduktionsmittels abzuleiten. Das beste Verhältnis von Außenluft zu Restabgas wird erreicht, wenn der Einsaugprozess kurz vor dem berechneten, extrapolierten oder gemessenen Gefrierzeitpunkt begonnen wird, so dass der Anteil von noch verbliebenem Abgas in dem Abgasrohr 270 minimal ist. Damit wird erreicht, dass weder die Hitze noch Verunreinigungen des Abgases in die Dosiervorrichtung eingesogen werden und so das Dosierventil, die Fördereinrichtung und / oder den Tankinhalt 212 verunreinigen.

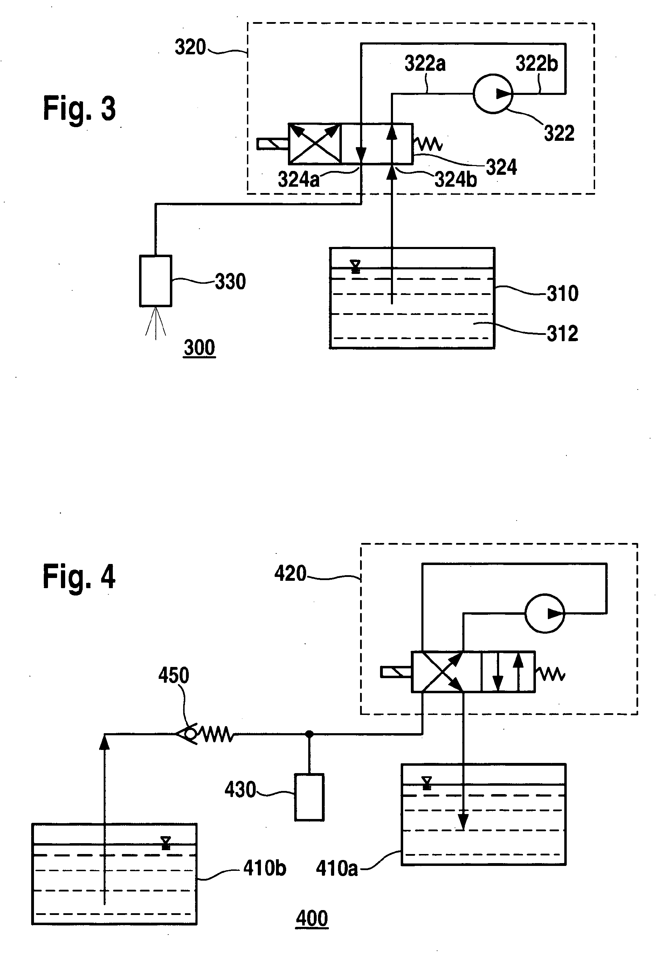

Die Figur 3 zeigt eine Dosiervorrichtung 300. Diese umfasst einen Tank 310 mit einem Tankinhalt 312, der von einer Fördereinrichtung 320 gefördert wird. Der von der Fördereinrichtung 320 geförderte Tankinhalt, d.h. das Reduktionsmittel, wird an das Dosierventil 330 geliefert und von diesem in einen Abgasstrang (nicht dargestellt) versprüht. Die Fördereinrichtung 320 umfasst eine Förderpumpe 322, die nur für eine Pumprichtung beziehungsweise Wirkrichtung ausgelegt ist. Der Eingang 322 a der Pumpe 322 und der Ausgang 322 b der Pumpe 322 ist mit einem Umpolungsventil 324 verbunden. Das Umpolungsventil weist ferner zwei Anschlüsse 324 a, b auf. Der eine Anschluss 324 a des Umpolungsventils ist mit über eine Leitung mit dem Dosierventil 330 verbunden. Der andere Anschluss des Umpolungsventils 324 b ist mit einer Leitung verbunden, die zu dem Tank 310 führt.

In der Figur 3 ist mit dem Bezugszeichen 324 ein 4/2-Ventil dargestellt, welches die Förderrichtung der Fördereinrichtung 320 ändern kann. Hierzu kann der erste Anschluss des 324 a des Umpolungsventils 324 mit dem Eingang 322 a der Förderpumpe oder mit dem Ausgang 322 b der Förderpumpe 322 verbunden werden. Gleichermaßen kann der zweite Anschluss 324 b des Umpolungsventils 324 mit dem Ausgang 322 b der Förderpumpe 322 oder mit dem Eingang 322 a der Förderpumpe 322 verbunden werden. Das Umpolungsventils 324 ist jedoch eingerichtet, den ersten Eingang 324 a mit einem Punkt zu verbinden, der sich von dem Punkt unterscheidet, mit dem der zweite Eingang 324 b verbunden ist, und umgekehrt.

Das Umpolungsventil ist vorzugsweise ein 4/2-Ventil, welches einen pneumatischen, hydraulischen oder elektrischen Aktuator aufweist, oder, alternativ, manuell bedient werden kann. In einer Ausführung wird die Rückstellung des Ventils auf einen Betriebszustand, in dem Reduktionsmittel in den Abgasstrang gefördert wird, mittels Federkraft ausgeführt. Wegen der Möglichkeit der von außen steuerbaren Betätigung wird das Umpolungsventil 324 als aktives Ventil bezeichnet. Die Bezeichnung "aktives Ventil" wird in dieser Beschreibung sinngemäß auch für alle anderen Ventile verwendet.

Die Förderpumpe 322 kann eine Schlauchpumpe beziehungsweise Peristaltikpumpe sein, die mit einem elektrischen Schrittmotor oder mit einem Gleichstrommotor, beispielsweise über ein Getriebe, verbunden ist. Alternativ wird als Förderpumpe eine Kolbenpumpe oder ein anderer zur Flüssigkeitsförderung geeigneter Pumpentyp verwendet.

In einer weiteren, nicht dargestellten alternativen Ausführung ist ein Anschluss der Pumpe direkt mit dem Tank verbunden, und der andere Anschluss der Pumpe ist direkt mit dem Dosierventil verbunden, wobei die Wirkrichtung der Pumpe umgekehrt werden kann, indem der darin vorgesehene Elektromotor und/oder ein entsprechendes Getriebe die Pumprichtung umkehrt.

In der Figur 4 ist eine Ausführung der erfindungsgemäßen Dosiervorrichtung 400 dargestellt. Die in Figur 4 dargestellte Ausführung weist zwei Tanks auf, das heißt ein Arbeitstank 410 a und einen Lagertank 410 b. Eine Fördereinrichtung 420 fördert im Normalbetrieb (nicht dargestellt) den Tankinhalt des Arbeitstanks 410 an ein Dosierventil 430. Bei der Verwendung von zwei getrennten Tanks können auch kleinere Räume im Kraftfahrzeug zur Unterbringung von Reduktionsmitteltanks verwendet werden.

In der Figur 4 ist ein Befüllmodus dargestellt, in dem die Fördereinrichtung von 420 verwendet wird, um den Tankinhalt aus dem Lagertank 410 b in den Arbeitstank 410 a zu fördern. Der Lagertank 410 b ist über ein Zuschalt-Sperrventil 450 mit der Fördereinrichtung 420 verbunden. Das Dosierventil 430 ist ebenfalls an die Verbindung angeschlossen, die das Zuschalt-Sperrventil 450 mit der Fördereinrichtung 420 verbindet. In dem in Figur 4 dargestellten Auffüllmodus ist das Dosierventil 430 geschlossen, und die Fördereinrichtung 420 erzeugt einen Unterdruck, der über das geöffnete Zuschalt-Sperrvenfil 450 an den Lagertank 410 b weitergegeben wird. Die Fördereinrichtung arbeitet in umgekehrter Förderrichtung, so dass der Arbeitstank 410 a befüllt wird. Mit anderen Worten entspricht der in Lagertank 410 b erzeugte Unterdruck dem Überdruck, der das Reduktionsmittel in den Arbeitstank 410 a drückt.

Die in Figur 4 dargestellte Ausführung umfasst einen Lagertank 410 b und einen Arbeitstank 410 a, die an verschiedenen Orten eines Fahrzeugs untergebracht werden können. Die Fördereinrichtung 420 wird im Normalbetrieb dazu verwendet, vom Arbeitstank 410 a Reduktionsmittel abzupumpen und das Dosierventil 430 damit zu versorgen. Gleichzeitig hat die Fördereinrichtung eine zweite Funktion, das heißt das erneute Befüllen des Arbeitstanks 410 a mit dem Tankinhalt des Lagertanks 410 b, wobei für diese Funktion lediglich eine Verbindung zwischen dem Lagertank 410 b und der Fördereinrichtung hergestellt werden muss. Hierbei verhindert das Zuschalt-Sperrventil 450, dass im normalen Fördermodus, in dem das Dosierventil 430 mit dem Tankinhalt von dem Arbeitstank 410 a versorgt wird, der Tankinhalt des Arbeitstanks 410 a nicht in den Liefertank gefördert wird.

Somit ist lediglich ein Zuschalt-Sperrventil 450 notwendig, um die Dosiervorrichtung mit zwei Funktionen auszustatten, d.h. Einspritzen mittels Dosierventil 430 und Neubefüllen des Arbeitstanks 410 a.

In der in Figur 4 dargestellten Ausführung ist das Zuschalt-Sperrventil 450 als passives Ventil mit geringem Öffnungsdruck ausgeführt. Ferner umfasst gemäß dieser Ausführung die Fördereinrichtung eine Förderpumpe, die nur eine Wirkrichtung aufweist, sowie ein daran angeschlossenes Umpolungsventil, vgl. Figur 3. Alternativ kann statt dieser Fördereinrichtung eine Förderpumpe mit umkehrbarer Wirkrichtung verwendet werden, wobei in diesem Fall das Umpolungsventil weggelassen werden kann. Das Umpolungsventil ist, wie auch in Figur 3 dargestellt, vorzugsweise ein 4/2-Ventil, dessen Schaltungsstellung gesteuert werden kann, beispielsweise mittels mechanischer und / oder elektrischer Aktuatoren.

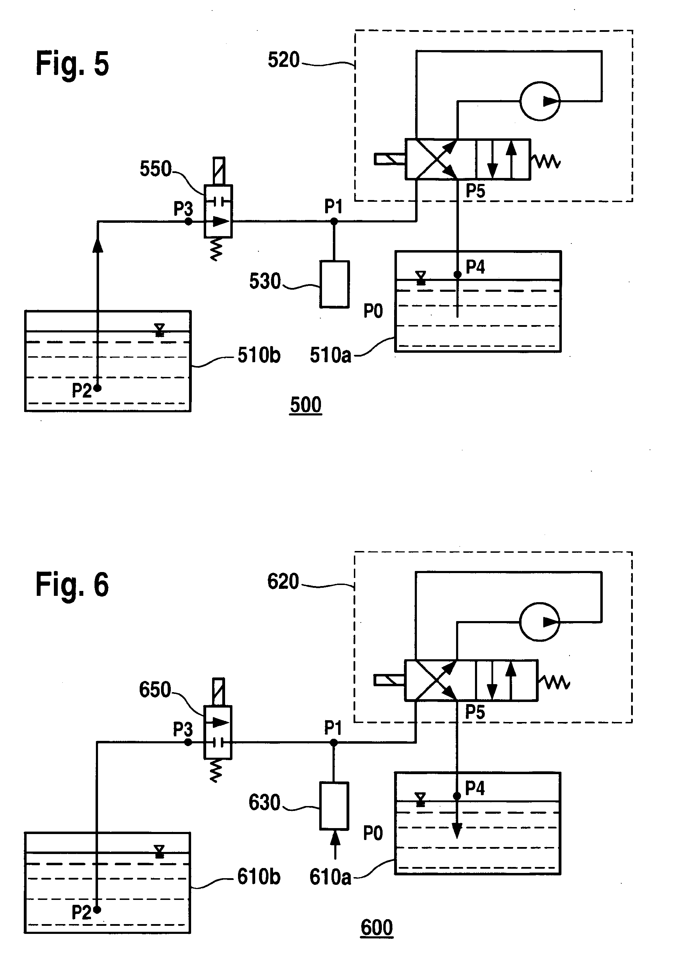

Die Figur 5 zeigt eine weitere Ausführung der erfindungsgemäßen Dosiervorrichtung 500 im Befüllungsmodus, in dem ein Arbeitstank 510 a mittels der Fördereinrichtung 520 mit dem Tankinhalt eines Lagertanks 510 b befüllt wird. Wie auch in der Figur 4 dargestellten Ausführung ist die Verbindung zwischen dem Lagertank 510 b und der Fördereinrichtung 520 mit dem Dosierventil 530 verbunden. Als Zuschalt-Sperrventil, das zwischen Lagertank 510 b und der Fördereinrichtung 520 vor dem Ankopplungspunkt des Dosierventils 530 angeordnet ist, wird ein aktives Zuschalt-Sperrventil verwendet, dessen Öffnungsbeziehungsweise Schließzustand von außen steuerbar ist. Wie auch in der Figur 4 lässt das Zuschalt-Sperrventil 550 den Fluss des Tankinhalts von dem Lagertank 510 b über die Fördereinrichtung 520 in den Arbeitstank 510 a zu, wobei das mit dieser Verbindung verbundene Dosierventil 530 geschlossen ist.

Zur besseren Darstellung der verschiedenen Betriebsmodi sind Punkte P0 bis P5 definiert. P0 bezeichnet den Austrittspunkt des Dosierventils, das in dem in Figur 5 dargestellten Betriebszustand der Neubefüllung geschlossen ist. Der Punkt P1 bezeichnet den Ankopplungspunkt des Dosierventils an die Verbindung zwischen Lagertank 510 b und Fördereinrichtung 520. Am Punkt P1 wird vorzugsweise ein T-Stück verwendet, an das die jeweiligen Leitungen angeschlossen werden, die zum Zuschalt-Sperrventil 550, zum Dosierventil 530 bzw. zur Fördereinrichtung 520 führen. Der Punkt P2 bezeichnet den Eintrittspunkt des Tankinhalts des Lagertanks in das Leitungssystem, während der Punkt P4 die Ankupplung des Leitungssystems der Dosiervorrichtung mit dem Tankinhalt des Arbeitstanks 510 a bezeichnet. Der Punkt P3 bezeichnet den Punkt der Ankupplung der von dem Lagertank 510 b kommenden Leitung, während der Punkt P5 den Anschlusspunkt der Fördereinrichtung an das restliche Dosiersystem bezeichnet.

Der in Figur 5 dargestellte Betriebsmodus entspricht dem Betriebsmodus, der anhand von Figur 4 beschrieben wurde. Ferner ist die in Figur 5 dargestellte Vorrichtung identisch mit der in Figur 4 dargestellten Vorrichtung, einschließlich der Schließ- und Öffnungszustände der einzelnen Komponenten, bis auf das Zuschalt-Sperrventil, welches in Figur 5 als aktives, das heißt betätigbares Zuschalt-Sperrventil 550 dargestellt ist, wohingegen das gleiche Element 450 in Figur 4 als passives Rückschlagventil 450 dargestellt ist, dessen Öffnungszustand nur durch die Druckdifferenz zwischen den Anschlüssen des Ventils 450 bestimmt ist.

In der Figur 6 ist das System von Figur 5 dargestellt, welches sich in einem ersten Belüftungszustand befindet. In diesem Belüftungszustand zieht das Dosierventil 630 Gas ein, beispielsweise Umgebungsluft, Abgas oder ein Umgebungsluft/Abgasgemisch, so dass zumindest das Dosierventil 630 von Reduktionsmittel geleert wird. Mit anderen Worten befindet sich zwischen Punkt P0 und P1 kein Reduktionsmittel. Abhängig von der Pumpdauer sind auch die Leitungen und Komponenten zwischen den Punkten P1 und P4 frei von Reduktionsmittel. Die Fördereinrichtung 620 läuft hierbei zum Entlüften in umgekehrter Förderrichtung und pumpt das zwischen den Punkten P0, P1, P5 und P4 vorliegende Reduktionsmittel in den Arbeitstank 610 a. Gleichzeitig ist das Zuschalt-Sperrventil 650, welches als aktives Zuschalt-Ventil ausgeführt ist, geschlossen, um zu vermeiden, dass durch den Unterdruck zwischen P0, P1 und P5 der Tankinhalt aus dem Lagertank 610 b in das System eintritt.

Es ist zu bemerken, dass in Figur 6 das Leitungssystem zwischen P2, P3 und P1 sowie das Zuschalt-Sperrventil 650 Reduktionsmittel enthält, insbesondere wenn dem in Figur 6 dargestellten Zustand der Befüllungs-Betriebsmodus (vergleiche Figur 5) vorausging. Jedoch ist das Rohrleitungssystem sowie die Komponenten zwischen P0, P1, P5 und P4 frei von Reduktionsmittel, da dieses durch an Punkt P0 eingesogenes Gas verdrängt wurde.

Dem in Figur 6 dargestellten Betriebszustand kann der in Figur 5 dargestellte Betriebszustand des Befüllens des Arbeitstanks vorausgehen. Alternativ kann im Figur 6 dargestellten Betriebszustand der normale Betriebsmodus der Dosiervorrichtung vorausgehen. Im normalen Betriebsmodus sperrt das Zuschalt-Sperrventil 650 und die Fördereinrichtung arbeitet in Förderrichtung, so dass diese Reduktionsmittel aus dem Arbeitstank 610 a an das Dosierventil 630 pumpt. In normalem Betriebsmodus ist das Dosierventil 630 geöffnet und sprüht Reduktionsmittel in den daran angeschlossenen Abgasstrang ein. Als normaler Betriebsmodus wird auch der Zustand bezeichnet, in dem die Fördereinrichtung in Förderrichtung geschaltet ist, das Zuschalt-Sperrventil 650 geschlossen ist und das Dosierventil 630 zumindest teilweise und/oder zeitweise geschlossen ist. Dies ist beispielsweise der Fall, wenn nicht die Maximalmenge an Reduktionsmittel in den Abgasstrang eingeführt werden soll. In diesem Fall ist das Dosierventil gemäß einer Pulsweitenmodulation geöffnet beziehungsweise geschlossen oder gemäß einem analogen Steuersignal nur zu einem bestimmten Grad geöffnet.

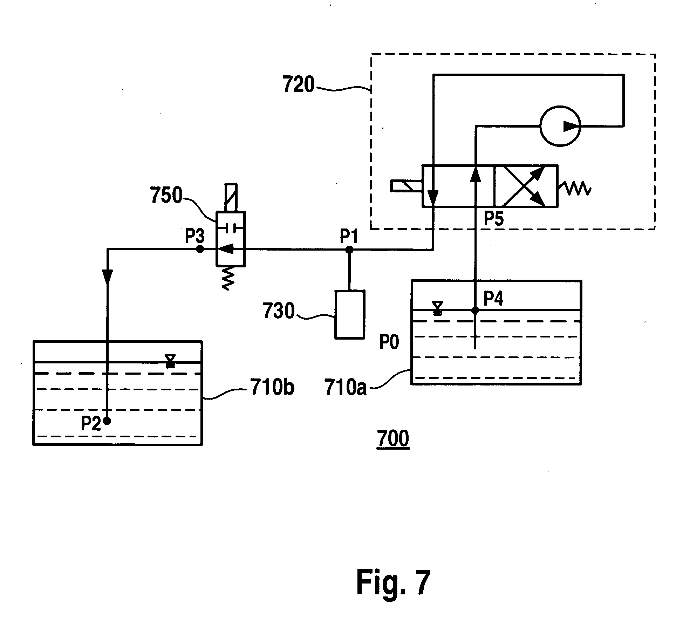

Die Figur 7 zeigt eine Ausführung der erfindungsgemäßen Dosiervorrichtung 700, die der Vorrichtung von Figur 5 und 6 gleicht. Im Gegensatz zu der Figur 5 und 6 zeigt die Figur 7 die erfindungsgemäße Dosiervorrichtung in einem zweiten Belüftungszustand. In diesem zweiten Belüftungszustand ist das Dosierventil 730 geschlossen, das heißt an dem Punkt P0 wird weder Reduktionsmittel abgegeben noch Gas eingesogen. Die Fördereinrichtung 720 arbeitet in Förderrichtung und baut am Punkt P1 einen Druck auf. In dem zweiten Belüftungsmodus ist das Zuschalt-Sperrventil 750 geöffnet. Wenn dem zweiten Belüftungsmodus der erste Belüftungsmodus vorausging, so enthält das Teilsystem zwischen den Punkten P1 und P4 Gas, das von dem Dosierventil 730 eingesogen wurde. Durch Umkehrung der Förderrichtung wird dieses Gas in das Zuschalt-Sperrventil 750 sowie in den Leistungsabschnitt zwischen dem Sperrventil 750 und dem Punkt P1 gedrängt. Dadurch wird das Zuschalt-Sperrventil 750 sowie der Leitungsabschnitt zwischen Punkt P1 und dem Zuschalt-Sperrventil 750 von Reduktionsmittel geleert. Abhängig von dem Gasvolumen, das in dem Teilsystem zwischen P1 und P4 gespeichert ist, kann auch der Leitungsabschnitt zwischen P3 und P2 (die Zuleitung des Lagertanks) zu dem Zuschalt-Sperrventil 750 von Reduktionsmittel geleert werden. Da insbesondere das Zuschalt-Sperrventil 750 empfindlich gegenüber Eisdruck ist, sollte der Punkt P3 so nahe wie möglich an Punkt P1 gelegt werden, so dass das Zuschalt-Sperrventil 730 bereits nach kurzer Aktivierung der Fördereinrichtung 720 im zweiten Belüftungsmodus geleert ist.

Hierbei ist zu bemerken, dass nach Beendigung des in Figur 6 dargestellten ersten Belüftungszustands die Leitung zwischen P4 und P5 zwar frei von Reduktionsmittel ist, jedoch bei Umkehrung der Fördereinrichtung wieder Reduktionsmittel aus dem Arbeitstank in die Fördereinrichtung gesogen wird. Daher sollte das Leitungssystem zwischen P1, P5 und P4 sowie die Fördereinrichtung 720 selbst ein Volumen aufweisen, das deutlich größer ist als das Volumen des Leitungsabschnitts zwischen P3 und P1 und des Zuschalt-Sperrventils 750. Der Leitungsabschnitt zwischen P3 und P2 ist weniger anfällig für gefrierendes Reduktionsmittel, da als Leitung zwischen P3 und P2 ein dehnbarer Schlauch verwendet werden kann. Dies gilt ebenso für die Leitung zwischen P4 und P5.

Wird daher durch Schließen des Dosierventils und Umkehren der Förderrichtung Reduktionsmittel vom Lagertank in den Arbeitstank geliefert (vergleiche Figur 5), dann sollte daraufhin der erste Belüftungsmodus eingestellt werden (vergleiche Figur 6). In dem ersten Belüftungsmodus bleibt die Förderrichtung umgekehrt und das Dosierventil sowie die Fördereinrichtung wird von Reduktionsmittel entleert. Für den Fall, dass ein Befüllungsmodus, wie in Figur 5 dargestellt, vorausgegangen war, so schließt sich vorzugsweise daran der zweite Belüftungsmodus an, der in Figur 7 dargestellt ist. Hier wird das im ersten Belüftungsmodus eingesogene Gas durch Umkehrung der Förderrichtung und Schließen des Dosierventils 730 durch das Zuschalt-Sperrventil 750 gedrückt, wodurch auch das Zuschalt-Sperrventil 750 von Reduktionsmittel geleert wird.

Falls die Fördereinrichtung 720 nur für das Pumpen von Reduktionsmittel ausgelegt ist, so wird vorzugsweise das innere Volumen der Leitung zwischen P1 und dem Eingang der Fördereinrichtung 720 größer ausgelegt als die Summe der Innenvolumina, die durch das Zuschalt-Sperrventil 750 und durch die Leitung zwischen P1 und dem Zuschalt-Sperrventil definiert sind. Hierdurch kann der in Figur 6 ausgeführte erste Belüftungsmodus auf ein Zeitfenster begrenzt werden, indem ein bestimmtes Gasvolumen eingesogen wird, das zur Entleerung des Dosierventils 730 und der Leitung zwischen P1 und der Fördereinrichtung genügt, und gleichzeitig ausreicht, um im zweiten Belüftungsmodus das Volumen zwischen P1 und P3 (insbesondere das Zuschalt-Sperrventil) von Reduktionsmittel zu befreien. Gleichzeitig kann das bestimmte Volumen derart vorgesehen sein, dass in die Fördereinrichtung nach Beenden des ersten Belüftungsmodus kein Gas eintritt.

Die Volumen können eingerichtet werden, indem die Leitungen mit bestimmten Längen und / oder Durchmessern ausgestattet werden. Ferner können auch Kammern verwendet werden, um Volumina vorzusehen.

Gemäß einer Ausführung der Erfindung wird der zweite Belüftungsmodus nur ausgeführt, wenn sich Reduktionsmittel in dem Zustand-Sperrventil 750 befindet, beispielsweise nach einem Befüllungsmodus. Wenn jedoch das Zuschalt-Sperrventil bereits geleert ist, beispielsweise durch einen vorausgehenden zweiten Belüftungsmodus, so ist nach dem Ausführen des ersten Belüftungsmodus (Figur 6) die Entleerung durch einen zweiten Belüftungsmodus nicht notwendig. Vielmehr kann in diesem Fall der normale Betriebsmodus vorgesehen werden, indem die Fördereinrichtung in Förderrichtung Reduktionsmittel aus dem Arbeitstank pumpt, und das Dosierventil Reduktionsmittel in den Abgasstrang einsprüht. Mit anderen Worten wird der zweite Belüftungsmodus nur dann ausgeführt, wenn der Ausführungszeitpunkt des letzten zweiten Belüftungsmodus (Figur 7) weiter zurückliegt als der letzte Ausführungszeitpunkt des Befüllungsmodus (Figur 6), durch den das Zuschalt-Sperrventil und die Leitung zwischen P3 und P1 mit Reduktionsmittel gefüllt wurde.

Vorzugsweise veranlasst eine Steuerung das Sperren oder Öffnen des Zuschalt-Sperrventils und des Dosierventils und steuert ferner die Fördereinrichtung und deren Förderrichtung. Ferner ist vorzugsweise das Dosierventil mit der Steuerung verbunden, um während des Befüllungsmodus und des zweiten Belüftungsmodus das Dosierventil zu sperren, während des ersten Belüftungsmodus das Einziehen von Gas in das Dosierventil zu erlauben und im normalen Betriebsmodus Reduktionsmittel aus dem Dosierventil auszustoßen. Vorzugsweise schließt die Steuerung das Zuschalt-Sperrventil im ersten Betriebsmodus und im normalen Betriebsmodus, öffnet das Zuschalt-Sperrventil im Befüllungsmodus in der Fließrichtung ausgehend vom Lagertank zum Arbeitstank und öffnet das Zuschalt-Sperrventil im zweiten Belüftungsmodus in umgekehrter Fließrichtung. Ferner ist die Steuerung vorzugsweise eingerichtet, die Fördereinrichtung im normalen Betriebsmodus und im zweiten Betriebsmodus in Förderrichtung vom Arbeitstank zum Dosierventil beziehungsweise Lagertank hin und sieht die Fördereinrichtung in umgekehrter Förderrichtung vor, wenn sich die Dosiervorrichtung im ersten Belüftungsmodus (Figur 6) oder im Befüllungsmodus (Figur 5) befindet.

In einer Ausführung ist das Dosierventil eine Drossel, deren Flussrate zwischen 0 % und 100 % frei eingestellt werden kann, beispielsweise durch ein wertkontinuierliches Signal und / oder ein pulsweitenmoduliertes Signal. Alternativ kann das Dosierventil ein Element umfassen, das entweder vollständig schließt oder vollständig öffnet und ein zweites Element, das davor oder danach angeschlossen ist, bestimmt die Durchflussmenge aufgrund eines Steuersignals.

Zum Ausgleich der entnommenen oder zugeführten Gas- oder Flüssigkeitsvolumina sind der Arbeitstank und der Lagertank über Be- bzw. Entlüftungsdrosseln oder -Ventile mit der Umgebung verbunden. Alternativ können der eine oder beide Tanks an Puffervolumina angeschlossen sein, die eine Volumenänderung kompensieren und einen direkten Fluidaustausch vermeiden, beispielsweise einen Balg oder einen Ballon.

Vorzugsweise sind die einzelnen Komponenten der Dosiervorrichtung über Leitungen mit dehnbaren elastischen Wänden verbunden, so dass eine Volumenänderung durch Gefrieren zu keiner Deformation führt.

## Patentansprüche

1. Dosiervorrichtung (100 - 700) zum Einbringen von Flüssig-Reduktionsmittel in einen Abgasstrang (270), mit einem Arbeitstank (110 - 310, 410a, 510a, 610a), der einen Tankinhalt umfasst;
einer mit dem Arbeitstank (110 - 310, 410a, 510a, 610a) verbundenen Fördereinrichtung (120 - 720), deren Förderrichtung umkehrbar ist;
einem mit der Fördereinrichtung (120 - 720) verbundenen Dosierventil (130 - 730), das von der Fördereinrichtung (120 - 720) mit dem Tankinhalt (212, 312) versorgt wird und eingerichtet ist, den Tankinhalt (212, 312) in einer Ausgaberichtung abzugeben; **dadurch gekennzeichnet, dass** das Dosierventil (130 - 730) eingerichtet und mit der Fördereinrichtung (120 - 720) derart verbunden ist, dass die Fördereinrichtung (120 - 720) bei umgekehrter Förderrichtung einen Unterdruck zwischen der Fördereinrichtung (120 - 720) und dem Dosierventil (130 - 730) aufbaut, durch den von dem Abgasstrang (270) stammendes Gas durch das Dosierventil (130 - 730) hindurch entgegengesetzt zu der Ausgaberichtung angesaugt wird, wobei ein Lagertank (410b - 610b) vorgesehen ist, der über eine Befüllungsleitung mit der Fördereinrichtung (120 - 720) verbunden ist, wobei die Befüllungsleitung ein Zuschalt-Sperrventil (450 - 750) umfasst, das eingerichtet ist, einen Fluidfluss in den Lagertank (410b - 610b) hinein zu sperren, und wobei das Dosierventil (130 - 730) in Fluidkommunikation mit der Befüllungsleitung ist.

2. Dosiervorrichtung (100 - 700) nach Anspruch 1, wobei der Arbeitstank (110 - 310, 410a, 510a, 610a) mittels einer Versorgungsleitung (140) mit dem Dosierventil (130 - 730) verbunden ist, über die das Dosierventil (130 - 730) mit dem Tankinhalt (212, 312) versorgt wird und über die bei umgekehrter Förderrichtung das Gas entgegengesetzt zu der Ausgaberichtung angesaugt wird.

3. Dosiervorrichtung (100 - 700) nach einem der vorangehenden Ansprüche, wobei die Fördereinrichtung (120 - 720) eine Förderpumpe mit umkehrbarer Wirkrichtung oder eine Förderpumpe (322) und ein Umpolungsventil (324) umfasst, das mit der Förderpumpe (322) verbunden und eingerichtet ist, einen Eingang (322a) der Förderpumpe (322) mit einem Ausgang (322b) der Förderpumpe (322) zu vertauschen.

4. Dosiervorrichtung (100 - 700) nach einem der vorhergehenden Ansprüche, wobei das Zuschalt-Sperrventil (450 - 750) eingerichtet ist, den Fluidfluss in den Lagertank hinein steuerbar zu sperren und das Dosierventil (130 - 730) eingerichtet ist, einen durch dieses hindurch gerichteten Fluidfluss steuerbar zu sperren, wobei durch das Zuschalt-Sperrventil (450 - 750) hindurch Gas zu dem Lagertank (410b - 610b) geleitet wird, wenn dieses offen ist, das Dosierventil (130 - 730) sperrt und die Fördereinrichtung (120 - 720) in Förderrichtung betrieben wird.

5. Verfahren zum Betreiben einer Dosiervorrichtung (100 - 700), die zum Einbringen von Flüssig-Reduktionsmittel in einen Abgasstrang (270) vorgesehen ist, mit den Schritten:
Vorsehen einer Fördereinrichtung (120 - 720), die mit einem Dosierventil (130 - 730) sowie mit einem Arbeitstank (110 - 310, 410a, 510a, 610a) verbunden ist;
Abgeben von Flüssig-Reduktionsmittel durch ein Dosierventil (130 - 730) in einer Abgabeflussrichtung, **dadurch gekennzeichnet, dass** das Verfahren umfasst:
Entleeren des Dosierventils (130 - 730) durch Einsaugen von Gas in einer Entleerungsflussrichtung, die der Abgabe-Flussrichtung entgegengesetzt ist, durch Betreiben der Fördereinrichtung (120 - 720) entgegengesetzt zur Förderrichtung, wobei das Verfahren ferner den Schritt umfasst:
Befüllen des Arbeitstanks (110 - 310, 410a, 510a, 610a) mit dem Inhalt eines daran angeschlossenen Lagertanks (410b - 610b) durch die Schritte:
Sperren des Fluidflusses durch das Dosierventil (130 - 730) und
Betreiben der Fördereinrichtung (120 - 720) entgegengesetzt zur Förderrichtung.

6. Verfahren nach Anspruch 5, wobei das Verfahren ferner umfasst: Entleeren eines Zuschalt-Sperrventils (450 - 750), das zwischen einem Lagertank (410b - 610b) und der Fördereinrichtung (120 - 720) vorgesehen ist, nach dem Schritt des Leerens des Dosierventils (130 - 730), durch Öffnen des Zuschalt-Sperrventils (450 - 750); Sperren des Dosierventils (130 - 730); und Betreiben der Fördereinrichtung (120 - 720) in Förderrichtung nach den Schritten des Öffnen und Sperrens.

7. Verfahren nach einem der Ansprüche 5 oder 6, wobei das Verfahren ferner den Schritt umfasst:
Ausgleichen von Druckunterschieden zwischen der Umgebung und dem Lagertank (410b - 610b) sowie zwischen der Umgebung und dem Arbeitstank (110 - 310, 410a, 510a, 610a) durch Einbringen oder Entfernen von Gas aus der Umgebung beziehungsweise in die Umgebung.

## Claims

1. Metering device (100 - 700) for introducing liquid reducing agent into an exhaust section (270), with an operating tank (110 - 310, 410a, 510a, 610a) which contains the contents of the tank;
a conveying device (120 - 720) which is connected to the operating tank (110 - 310, 410a, 510a, 610a) and the conveying direction of which is reversible;
and a metering valve (130 - 730) which is connected to the conveying device (120 - 720) and is supplied with the tank contents (212, 312) by the conveying device (120 - 720) and is designed to dispense the tank contents (212, 312) in a discharge direction, **characterized in that** the metering valve (130 - 730) is designed and is connected to the conveying device (120 - 720) in such a manner that, when the conveying direction is reversed, the conveying device (120 - 720) builds up a negative pressure between the conveying device (120 - 720) and the metering valve (130 - 730), by means of which gas originating from the exhaust section (270) is sucked up through the metering valve (130 - 730) in the opposite direction to the discharge direction, a storage tank (410b - 610b) being provided, said storage tank being connected to the conveying device (120 - 720) via a filling line, the filling line comprising a connection - blocking valve (450 - 750) which is designed to block a fluid flow into the storage tank (410b - 610b), and the metering valve (130 - 730) being in fluid communication with the filling line.

2. Metering device (100 - 700) according to Claim 1, wherein the operating tank (110 - 310, 410a, 510a, 610a) is connected to the metering valve (130 - 730) by means of a supply line (140) via which the metering valve (130 - 730) is supplied with the tank contents (212, 312) and via which, when the conveying direction is reversed, the gas is sucked up in the opposite direction to the discharge direction.

3. Metering device (100 - 700) according to one of the preceding claims, wherein the conveying device (120 - 720) comprises a conveying pump with a reversible direction of action, or a conveying pump (322) and a pole reversal valve (324) which is connected to the conveying pump (322) and is designed to interchange an input (322a) of the conveying pump (322) with an output (322b) of the conveying pump (322).

4. Metering device (100 - 700) according to one of the preceding claims, wherein the connection-blocking valve (450 - 750) is designed to controllably block the fluid flow into the storage tank, and the metering valve (130 - 730) is designed to controllably block a fluid flow directed through itself, wherein gas is conducted through the connection-blocking valve (450 - 750) to the storage tank (410b - 610b), when said valve is open, the metering valve (130 - 730) is blocked and the conveying device (120 - 720) is operated in the conveying direction.

5. Method for operating a metering device (100 - 700) which is provided for introducing liquid-reducing agent into an exhaust section (270), with the following steps:
providing a conveying device (120 - 720) which is connected to a metering valve (130 - 730) and to an operating tank (110 - 310, 410a, 510a, 610a); and
dispensing liquid-reducing agent in a dispensing direction of flow by means of a metering valve (130 - 730), **characterized in that** the method comprises:
emptying the metering valve (130 - 730) by sucking in gas in an emptying direction of flow which is opposite to the dispensing direction of flow, by operation of the conveying device (120 - 720) in the opposite direction to the conveying direction, the method furthermore comprising the following step:
filling the operating tank (110 - 310, 410a, 510a, 610a) with the contents of a storage tank (410b - 610b) connected thereto, by the following steps:
blocking the fluid flow through the metering valve (130 - 730) and operating the conveying device (120 - 720) in the opposite direction to the conveying direction.

6. Method according to Claim 5, wherein the method furthermore comprises: emptying a connection-blocking valve (450 - 750), which is provided between a storage tank (410b - 610b) and the conveying device (120 - 720), after the step of emptying the metering valve (130 -730), by opening the connection-blocking valve (450 - 750); blocking the metering valve (130 - 730), and operating the conveying device (120 - 720) in the conveying direction after the opening and blocking steps.

7. Method according to either of Claims 5 and 6, wherein the method furthermore comprises the following step:
equalizing differences in pressure between the surroundings and the storage tank (410b - 610b) and between the surroundings and the operating tank (110 - 310, 410a, 510a, 610a) by introducing gas into the surroundings or removing gas from the surroundings.

## Revendications

1. Dispositif de dosage (100 - 700) pour l'introduction d'agent réducteur fluide dans une ligne d'échappement (270), comprenant un réservoir de travail (110 - 310, 410a, 510a, 610a), qui comprend un contenu de réservoir ;
un dispositif de transport (120 - 720) connecté au réservoir de travail (110 - 310, 410a, 510a, 610a), dont le sens de transport peut être inversé ;
une soupape de dosage (130 - 730) connectée au dispositif de transport (120 - 720), qui est alimentée par le dispositif de transport (120 - 720) en le contenu du réservoir (212, 312) et qui est prévue pour délivrer le contenu du réservoir (212, 312) dans une direction de distribution ; **caractérisé en ce que** la soupape de dosage (130 - 730) est prévue, et connectée au dispositif de transport (120 - 720) de telle sorte que le dispositif de transport (120 - 720), en cas d'inversion du sens de transport, produise une dépression entre le dispositif de transport (120 - 720) et la soupape de dosage (130 - 730), grâce à laquelle du gaz provenant de la ligne d'échappement (270) est aspiré à travers la soupape de dosage (130 - 730) dans le sens inverse de la direction de distribution, un réservoir de stockage (410b - 610b) étant prévu, lequel est connecté par le biais d'une conduite de remplissage au dispositif de transport (120 - 720), la conduite de remplissage comprenant une soupape de blocage de raccordement (450 - 750) qui est prévue pour bloquer un flux de fluide entrant dans le réservoir de stockage (410b - 610b), et la soupape de dosage (130 - 730) étant en communication fluidique avec la conduite de remplissage.

2. Dispositif de dosage (100 - 700) selon la revendication 1, dans lequel le réservoir de travail (110 - 310, 410a, 510a, 610a) est connecté au moyen d'une conduite d'alimentation (140) à la soupape de dosage (130 - 730), par le biais de laquelle conduite la soupape de dosage (130 - 730) est alimentée en le contenu du réservoir (212, 312), et par le biais de laquelle, en cas d'inversion du sens de transport, le gaz est aspiré dans le sens inverse de la direction de distribution.

3. Dispositif de dosage (100 - 700) selon l'une quelconque des revendications précédentes, dans lequel le dispositif de transport (120 - 720) comprend une pompe d'alimentation avec un sens d'action inversable, ou une pompe d'alimentation (322) et une soupape d'inversion de polarité (324), qui est connectée à la pompe d'alimentation (322) et qui est prévue pour échanger une entrée (322a) de la pompe d'alimentation (322) avec une sortie (322b) de la pompe d'alimentation (322).

4. Dispositif de dosage (100 - 700) selon l'une quelconque des revendications précédentes, dans lequel la soupape de blocage de raccordement (450
- 750) est prévue pour bloquer de manière commandable le flux de fluide entrant dans le réservoir de stockage et la soupape de dosage (130
- 730) est prévue pour bloquer de manière commandable un flux de fluide orienté à travers celle-ci, du gaz étant guidé à travers la soupape de blocage de raccordement (450 - 750) jusqu'au réservoir de stockage (410b - 610b), quand celle-ci est ouverte, la soupape de dosage (130 - 730) étant bloquée et le dispositif de transport (120 - 720) étant commandé dans le sens de transport.

5. Procédé pour faire fonctionner un dispositif de dosage (100 - 700) qui est prévu pour introduire un agent réducteur fluide dans une ligne d'échappement (270), comprenant les étapes consistant à :
prévoir un dispositif de transport (120 - 720) qui est connecté à une soupape de dosage (130 - 730) ainsi qu'à un réservoir de travail (110 - 310, 410a, 510a, 610a) ; délivrer de l'agent réducteur fluide à travers une soupape de dosage (130 - 730) dans un sens de flux de distribution, **caractérisé en ce que** le procédé comprend l'étape consistant à :
vidanger la soupape de dosage (130 - 730) par aspiration de gaz dans un sens de flux de vidange, qui est opposé au sens de flux de distribution, en faisant fonctionner le dispositif de transport (120 - 720) en sens inverse du sens de transport, le procédé comprenant en outre l'étape consistant à :
remplir le réservoir de travail (110 - 310, 410a, 510a, 610a) avec le contenu d'un réservoir de stockage (410b - 610b) qui lui est raccordé, par les étapes suivantes :
bloquer le flux de fluide à travers la soupape de dosage (130 - 730) et faire fonctionner le dispositif de transport (120 - 720) en sens inverse du sens de transport.

6. Procédé selon la revendication 5, dans lequel le procédé comprend en outre les étapes consistant à : vidanger une soupape de blocage de raccordement (450 - 750) qui est prévue entre un réservoir de stockage (410b - 610b) et le dispositif de transport (120 - 720), après l'étape de vidange de la soupape de dosage (130 - 730), en ouvrant la soupape de blocage de raccordement (450 - 750) ; bloquer la soupape de dosage (130 - 730) ; et faire fonctionner le dispositif de transport (120 - 720) dans le sens de transport après les étapes d'ouverture et de blocage.

7. Procédé selon l'une quelconque des revendications 5 ou 6, dans lequel le procédé comprend en outre l'étape suivants :
équilibrer les différences de pression entre l'environnement et le réservoir de stockage (410b - 610b) et entre l'environnement et le réservoir de travail (110 - 310, 410a, 510a, 610a), en introduisant ou en évacuant du gaz dans ou hors de l'environnement.
